Europäisches Patentamt

European Patent Office

Office européen des brevets

(11) Veröffentlichungsnummer: **0 658 424 A2**

## (12) EUROPÄISCHE PATENTANMELDUNG

(21) Anmeldenummer: **94119129.8**

(22) Anmeldetag: **05.12.94**

(51) Int. Cl.6: **B32B 31/12**, B32B 3/10, G06K 19/077, B42D 15/10

(30) Priorität: **17.12.93 DE 4343206**

(43) Veröffentlichungstag der Anmeldung:
**21.06.95 Patentblatt 95/25**

(84) Benannte Vertragsstaaten:
**DE FR GB IT**

(71) Anmelder: **BAYER AG**

**D-51368 Leverkusen (DE)**

(72) Erfinder: **Wank, Dipl.-Ing. Joachim**
**Zülpicher Strasse 7**
**D-41541 Dormagen (DE)**
Erfinder: **Weber, Dipl.-Ing. Hans Leo**
**Dahlienweg 7**
**D-41569 Rommerskirchen (DE)**

(54) Verfahren zur Herstellung von Rohlingen für Ausweiskarten.

㊄ Gegenstand der Erfindung ist ein Verfahren zur Herstellung von Rohlingen für Ausweiskarten, insbesondere Chipkarten, bei dem die zur Aufnahme von beispielsweise Identifikations- oder Speicherelementen vorgestanzte Folie mit weiteren Folienschichten laminiert wird unter Verwendung eines die Stanzform erhaltenden Werkzeuges.

Fig. 1

EP 0 658 424 A2

Für die Herstellung von Ausweiskarten (z.B. Chipkarten, insbesondere Telefonkarten) werden bisher die Rohlinge entweder im Spritzgußverfahren oder aus ca. 0,7 mm dicken Folien hergestellt. Beim Spritzgußverfahren werden die Aussparungen für den Chip durch einen entsprechenden Kern im Spritzgußwerkzeug erhalten.

Der Nachteil des Spritzgußverfahrens ist, daß die so hergestellten Rohlinge hohe innere Spannungen aufweisen, da die thermoplastische Masse unter hohem Druck in die Form eingepreßt werden muß, um bei der geringen Materialdicke von ca. 0,7 mm eine Formfüllung zu erreichen. Ein weiterer erheblicher Nachteil ist der, daß Informationen, wie Beschriftung oder Bebilderung, nachträglich auf das Einzelteil aufgebracht werden müssen und die Rohlinge nicht wie bei der Verwendung von Folien im Mehrfachnutzen bedruckt werden können.

Bei dem alternativen Herstellungsverfahren der Chipkarten, ausgehend von z.B. ca. 0,8 mm dicken Folien, werden die Aussparungen für den Chip durch mechanisches Fräsen hergestellt. Dieses Verfahren ist sehr zeitaufwendig, die eingesetzten Werkzeuge sind sehr teuer und die Standzeit der Fräser, besonders bei der Bearbeitung von hochgefüllten Kunststoffen ist relativ kurz. Desweiteren ist nicht ausgeschlossen, daß Kerben erzeugt werden, die zu einem vorzeitigen Bruch der Kunststoffmatrix fuhren. Hinzu kommen bei bestimmten Massenkunststoffen, wie z.B. Polycarbonat, Schwierigkeiten beim Fräsen durch Verschmieren des Kunststoffes.

Aufgabe der Erfindung war es, ein Herstellverfahren für Ausweiskarten-Rohlinge zu finden, daß die genannten Nachteile nicht aufweist und für eine industrielle Massenproduktion geeignet ist.

Die Aufgabe wird erfindungsgemäß gelöst durch ein Verfahren zur Herstellung von Rohlingen für Ausweiskarten, insbesondere Chipkarten aus Kunststoff, dadurch gekennzeichnet, daß ein oder mehrere vorgestanzte Folien aus thermoplastischem Kunststoff, deren gestanzte Aussparungen der Geometrie eines einzubettenden Elementes, insbesondere eines Identifikations- oder Speicherelementes, beispielsweise eines elektronischen Chips oder Speichermoduls entsprechen, mit einer oder mehreren zusätzlichen Folien als Decklagen oder Beschriftungslagen so zusammen laminiert werden, daß die Aussparungen enthaltenden Folien auf ein Preßblech, das den Abmessungen des einzubettenden Elementes entsprechende Erhebungen aufweist, so angeordnet werden, daß die Folie mit der oberen Kante der Erhebung des Preßbleches eine Ebene bildet, auf dieses Folienpaket oder die einzelne Folie die eine oder mehrere Folienlagen aufweisende Decklage angeordnet wird, dieses Paket mit einem planen, weiteren Preßblech abgedeckt und die Einheit von Folienlagen und Preßblechen in einer Laminierpresse verpreßt wird.

Ein bevorzugtes Verfahren ist gekennzeichnet dadurch, daß die die Erhebungen aufweisende Preßplatte, diese Erhebungen in xfacher Ausführung enthält, wobei die Abstände so angeordnet sind, daß nach dem Laminieren die xfache Anzahl Karten-Rohlinge ausgestanzt werden kann.

Eine bevorzugte Variante des erfindungsgemäßen Verfahrens ist dadurch gekennzeichnet, daß die einzelnen Folienlagen durch Verschweißen, d.h. durch Erwärmung unter Druck, bei einer Temperatur über der Erweichungstemperatur des Kunststoffes der Folien, verbunden werden kann.

Eine weitere bevorzugte Varinate des erfindungsgemäßen Verfahren ist dadurch gekennzeichnet, daß die einzelnen Folienlagen mittels eines thermoplastischen und/oder duroplastischen Klebers, bevorzugt eines Klebers auf der Basis von Polyurethan, bzw. Haftvermittleres verbunden werden.

Erfindungsgemäß geeignete Folien aus thermoplastischem Kunststoff sind solche aus bekannten, thermoplastischen aromatischen Polycarbonaten mit einem Gewichtsmittelmolekularbereich $\overline{M}_w$ von 25 000 bis 200 000, vorzugsweise von 30 000 bis 120 000 und (das Molekulargewicht $\overline{M}_w$ wird ermittelt über die relative Viskosität $\eta_{rel}$ in $CH_2Cl_2$ bei 20°C und einer Konzentration von 0,5 g pro 100 ml $CH_2Cl_2$); erfindungsgemäß geeignete Folien aus thermoplastischen Kunststoffen sind außerdem vorzugsweise solche aus bekannten thermoplastischen Polyarylsulfonen, welche linear (z.B. entsprechend DE-OS 27 35 144) oder verzweigt (siehe z.B. DE-OS 27 35 092 bzw. DE-OS 23 05 413) sein können.

Geeignete lineare Polyarylsulfone sind alle bekannten aromatischen Polysulfone oder Polyethersulfone mit einem Gewichtsmittelmolekulargewicht $\overline{M}_w$ (gemessen beispielsweise mittels Lichtstreuung) von etwa 15 000 bis etwa 55 000, vorzugsweise von etwa 20 000 bis etwa 40 000. Derartige Polyarylsulfone sind beispielsweise in den Schriften DE-OS 17 19 244 bzw. US-PS 33 65 517 beschrieben.

Geeignete verzweigte Polyarylsulfone sind insbesondere die verzweigten Polyarylethersulfone gemäß DE-OS 23 05 413 bzw. US-PS 39 60 815, deren Gewichtsmittelmolekulargewicht $\overline{M}_w$ - (gemessen beispielsweise mittels Lichtstreuung) von etwa 15 000 bis etwa 50 000, vorzugsweise von etwa 20 000 bis 40 000 beträgt.

Für die Folien sind als weitere geeignete thermoplastische Kunststoffe solche auf Basis von thermoplastischen Celluloseestern, thermoplastischem Polyvinylchlorid, thermoplastischen Styrol-Acrylnitril-Copolymerisate und thermoplastischem Polymethylmethacrylat zu nennen.

Erfindungsgemäß geeignete Cellulosester werden nach üblichen Verfahren durch Veresterung der Cellulose mit aliphatischen Monocarbonsäureanhydriden, vorzugsweise Essigsäure- und Buttersäure- oder Essigsäure- und Propionsäureanhydrid, gewonnen. Die in der Rohlösung durchzuführende Hydrolyse wird durch einen geringen Wasserüberschuß so gesteuert, daß ein geringer Hydroxylgehalt (4 bis 25) erhalten wird. Die oxidative Bleiche des aus der Lösung isolierten Celluloseesters muß so durchgeführt werden, daß im Endprodukt kein Oxydationsmittel mehr nachweisbar ist; gegebenenfalls muß eine Nachbehandlung mit Reduktionsmitteln erfolgen. Zur Bestimmung der OH-Zahl der Ester werden die freien Hydroxylgruppen des Cellulosesesters mit Acetanhydrid in Pyridin verestert, der Überschuß Anhydrid mit Wasser umgesetzt und zurücktitriert.

Die Viskosität geeigneter Celluloseester soll 0,3 bis 0,5 Poise, gemessen als 20 gew.-%ige Lösung in Aceton, betragen. Vorzugsweise zu verwendende Celluloseester weisen im Falle der Acetobutyrate einen Essigsäuregehalt von 17 bis 23 Gew.-% und einen Buttersäuregehalt von 45 bis 50 Gew.-%, im Falle der Acetopropionate einen Propionsäuregehalt von 61 bis 69 Gew.-% und einen Essigsäuregehalt von 2 bis 7 Gew.-% auf. Die OH-Zahlen liegen üblicherweise zwischen 4 und 25. Das Gewichtsmittel des Molekulargewichts $\overline{M}_w$ soll von 10 000 bis 1 000 000, vorzugsweise von 100 000 bis 500 000, betragen.

Erfindungsgemäß geeignete thermoplastische Polyvinylchloride sind beispielsweise die im Handel befindlichen PVC-Typen.

Erfindungsgemäß geeignete thermoplastische Styrol-Acrylnitril-Copolymerisate sind Mischpolymerisate des Styrols mit Acrylnitril die z.B. durch Suspensionspolymerisation in Gegenwart von Katalysatoren aus den Monomeren bzw. der Mischung der Monomeren mit einem Molekulargewicht ($\overline{M}_w$) von 10 000 bis 600 000 erhalten werden (das Molekulargewicht wird gemessen in DMF bei einer Konzentration von 5 g/l und 20°C).

Zur an sich bekannten Herstellung der Folien wird auf die deutsche Offenlegungsschrift DE-OS 25 17 033 oder auf DE-OS 25 31 240 verwiesen.

Die Folien können einseitig mattiert oder einseitig strukturiert sein, was in an sich bekannter Weise erfolgt, in dem die Schmelze des thermoplastischen Kunststoffs durch eine Breitschlitzdüse ausgepreßt wird und die Schmelzfahne über eine mattierte bzw. strukturierte Abkühlwalze abgezogen wird.

Die Folien können auch einseitig poliert und einseitig mattiert sein.

Weiterer bevorzugter Gegenstand der Erfindung ist ein Verfahren zur Herstellung von Ausweiskarten bei dem ausgehend von den erfindungsgemäßen hergestellten Rohlingen die Elemente, insbesondere elektronische Chips oder Speicher-Module, in die vorgeformten Aussparungen passgenau eingeklebt oder in einem weiteren Preßschritt mit dem Rohling verpreßt werden.

Die Erfindung wird im folgendenen anhand von Figuren beispielhaft näher erläutert.

Hierbei zeigen

Fig. 1   Schema eines Querschnittes durch den Aufbau eines erfindungsgemäßen Preßpaketes

Fig. 2   Aufsicht auf einen Ausschnitt aus einer Stanzfolie mit vier Aussparungen für 4 Chip-Karten

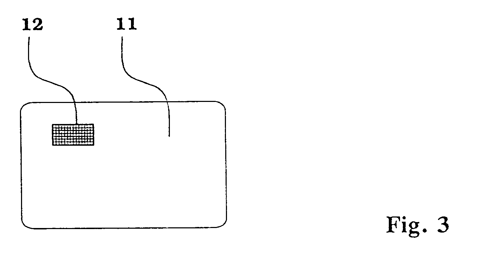

Fig. 3   Schema einer Ausweiskarte 11 mit Identifikations- bzw. Speicherelement 12

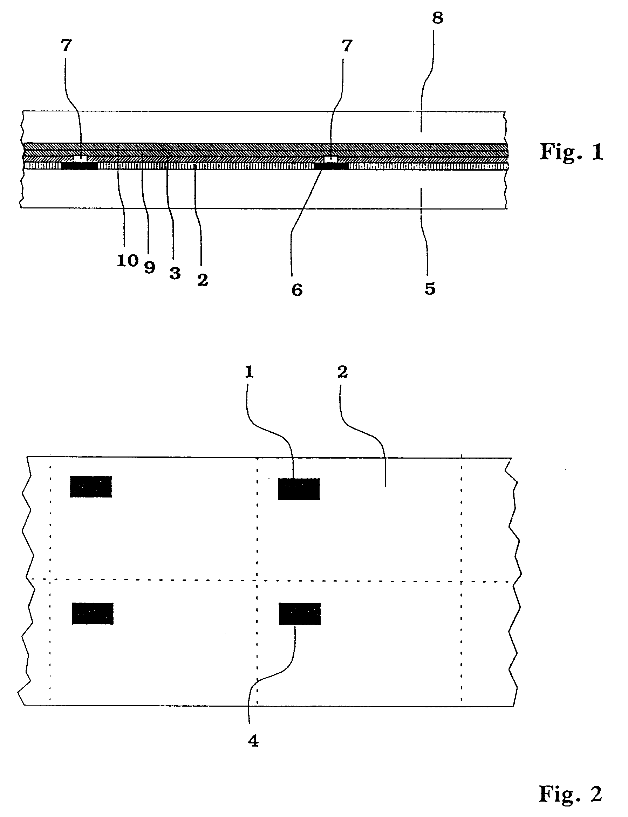

Bei dem erfindungsgemäßen Verfahren wird der Karten-Rohling so hergestellt, daß in die Folien 2 bzw. 3 Aussparungen 1, 4, die den Abmessungen des Elementes (z.B. eines elektronischen Chips oder Speichermoduls) entsprechen, gestanzt werden (s. Fig. 2). Die Folien werden dann auf das Preßblech 5 aufgelegt, das erhabene Konturen 6, 7 aufweist, deren jeweilige Oberkante bündig mit der Folienoberfläche abschließt. Die Folienlage wird mit weiteren Folien 9, 10 als Decklage abgeschlossen, mit einem weiteren Preßblech 8 versehen und anschließend durch Pressen laminiert, gegebenenfalls unter Einwirkung von Wärme. Das Stanzen der Aussparungen 1, 4 erfolgt im Mehrfachnutzen. Der Stanzprozeß ist sehr kostengünstig gegenüber dem Fräsen. Die Rohlinge werden aus der verpressten Folienlage ausgestanzt oder ausgeschnitten.

Beim Laminieren ohne die Konturen 6, 7 des Preßbleches 5 würden die Aussparungen 1, 4 die vorgegebene Geometrie verlieren, es könnte auch zu einem Verschieben der einzelnen Folienlagen kommen. Ein weiterer nicht gewünschter Effekt wäre das Einsinken der Decklage 9, 10 in die Aussparungen 1, 4, das durch das erfindungsgemäße Verfahren vermieden wird.

Der Chip oder das Speichermodul 12 können in einem weiteren Schritt mit dem Kartenrohling verpresst oder verklebt werden.

## Beispiel

In eine 0,2 mm dicke Folie aus Polycarbonat mit einer $\eta_{rel}$ Viskosität von 1,32 (gemessen in $CH_2Cl_2$ bei 20°C und einer Konzentration von 0,5 g pro 100 ml), die 15 Gew.-% $TiO_2$ enthält, werden die Aussparungen für einen Speicherchip (9,62 x 6,78 mm) gemäß ISO 7816/2 ausgestanzt. Die Abstände der Aussparungen sind 60 mm in der einen und 95 mm in der um 90° versetzten Richtung.

Diese Folie wird auf das Preßblech, das die entsprechend dimensionierten Konturen trägt, aufgelegt. Als zweite Folie wird in eine 0,4 mm dicke Folie aus Polycarbonat, gefüllt mit 15 Gew.-% $TiO_2$, die Aussparung für ein Modul von ca. 6,5 mm x 6,5 mm Querschnitt gestanzt und diese ebenfalls auf die Kontur des Preßbleches gelegt. Das an seiner Oberfläche ebene Paket wird mit einer 0,1 mm dicken Folie aus Polycarbonat, versehen mit dem gewünschten Dekor, abgedeckt, mit einer zweiten, planen Preßplatte bedeckt und das gesamte Paket in einer heizbaren Presse bei einem Preßdruck von 28 $N/cm^2$ und einer Temperatur von 180 °C 10 min verpreßt. Danach wird die Preßplatte bei bestehendem Preßdruck auf Raumtemperatur abgekühlt.

Nach Entnahme der Folie können die einzelnen Chipkarten-Rohlinge durch Stanzen aus der Folie ausgetrennt werden, wobei die erhaltenen Aussparungen gleichzeitig als Registrier- bzw. Positionierungshilfe dienen, um z.B. einen exakten Abstand zwischen Kartenaußenkarte und Aussparung zu gewährleisten.

Die vorgesehenen Speichermodule lassen sich mühelos passgenau in die Aussparungen einfügen und durch Kleben oder Verpressen mit dem Karten-Rohling verbinden.

**Patentansprüche**

1. Verfahren zur Herstellung von Rohlingen für Ausweiskarten (11), dadurch gekennzeichnet, daß eine oder mehrere vorgestanzte Folien (2, 3) aus thermoplastischem Kunststoff, deren gestanzte Aussparungen (1, 4) der Geometrie eines einzubettenden Elementes (12) entsprechen, mit einer oder mehreren zusätzlichen Folien (9, 10) als Decklagen oder Beschriftungslagen so zusammen laminiert werden, daß die die Aussparungen (1, 4) enthaltenden Folien (2, 3) auf ein Preßblech (5), das den Abmessungen des einzubettenden Elementes (12) entsprechende Erhebungen (6, 7) aufweist, so angeordnet werden, daß die Folien (2, 3) mit der oberen Kante der Erhebungen (6, 7) des Preßbleches (5) eine Ebene bildet, auf dieses Folienpaket oder die einzelne Folie eine, eine oder mehrere Folien aufweisende Decklage (9, 10) angeordnet wird, dieses Paket mit einem planen, weiteren Preßblech (8) abgedeckt, und die Einheit von Folienlagen (2, 3, 9, 10) und Preßblechen (5, 8) in einer Laminierpresse verpreßt wird.

2. Verfahren gemäß Anspruch 1, dadurch gekennzeichnet, daß die die Erhebungen (6, 7) aufweisende Preßplatte (5) die Erhebungen (6, 7) in x-facher Ausführung enthält, wobei die Erhebungen (6, 7) so angeordnet sind, daß nach dem Laminieren die x-fache Anzahl Karten-Rohlinge ausgestanzt werden kann.

3. Verfahren gemäß Anspruch 1 oder 2, dadurch gekennzeichnet, daß die einzelnen Folienlagen (2, 3 9, 10) durch Verschweißen, d.h. durch Erwärmung unter Druck bei einer Temperatur über der Erweichungstemperatur des Kunstoffs der Folien verbunden werden.

4. Verfahren Anspruch 1 oder 2, dadurch gekennzeichnet, daß die einzelnen Folienlagen (2, 3 9, 10) mittels eines thermoplastischen und/oder duroplastischen Klebers bzw. Haftvermittlers miteinander verbunden werden.

5. Verfahren gemäß Anspruch 4, dadurch gekennzeichnet, daß ein Kleber auf Basis von Polyurethan verwendet wird.

6. Verfahren gemäß den Ansprüchen 1 bis 5, dadurch gekennzeichnet, daß das einzubettende Element (12) ein Identifikations- oder Speicherelement ist.

7. Verfahren zur Herstellung von Ausweiskarten, dadurch gekennzeichnet, daß in die vorgeformten Aussparungen (1, 4) von Kartenrohlingen erhalten nach dem Verfahren gemäß den Ansprüchen 1 bis 6 elektronische Chip- oder Speichermodule eingeklebt oder in einen weiteren Preßschritt mit dem Rohling verpreßt werden.

8. Verwendung der Kartenrohlinge erhältlich nach dem Verfahren gemäß den Ansprüchen 1 bis 6 zur Herstellung von Ausweiskarten.

Fig. 1

Fig. 2

12    11

Fig. 3